(19) Europäisches Patentamt
European Patent Office
Office européen des brevets

(11) **EP 3 923 191 A1**

(12) **EUROPEAN PATENT APPLICATION**

(43) Date of publication:
**15.12.2021 Bulletin 2021/50**

(51) Int Cl.:
***G06K 9/62*** *(2006.01)*

(21) Application number: **20179532.5**

(22) Date of filing: **11.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• **DE PANAFIEU, Elie**
  **75013 PARIS (FR)**
• **MAAG, Maria Laura**
  **91700 STE GENEVIEVE DES BOIS (FR)**
• **LUTZ, Quentin**
  **91300 MASSY (FR)**

(74) Representative: **Loyer & Abello**
  **9, rue Anatole de la Forge**
  **75017 Paris (FR)**

(54) **CLUSTERING OF A SET OF ITEMS**

(57) A computer-implemented method for clustering a set of items comprises the steps of:

Providing a plurality of clusters, wherein each cluster is represented by a vertex of a clustering graph,

Obtaining cluster information associated to the first item and the second item, wherein the cluster information states whether the first item and the second item must belong to the same cluster,

If the cluster information states that the first item and the second item must belong to the same cluster, updating the clusters by merging the first cluster and the second cluster,

If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

FIG. 1

## Description

## Field

The disclosure relates to methods and apparatuses for clustering a set of items, in particular a dataset representing said items. The methods and apparatuses disclosed can be used to obtain clusters of items from a dataset so that the items belonging to distinct clusters have different characteristics and so that each cluster can be further labelled as a class, for instance to be used as a training set for a classifier or as ground truth for rating algorithms. Various example embodiments relate to a set of images or a set of text data.

## Background

Clustering a dataset is often the first step before labelling the dataset. Given a dataset, a clustering is first performed in order to separate the items in different clusters where the items of a same cluster have common characteristics and items from distinct clusters have different characteristics. Once the dataset has been clustered, each cluster can be labelled as a class. For instance, given images of cats and dogs, the images are clustered in two clusters, which are then labelled as two classes, the class "cat" and the class "dog".

Such a labelled dataset can be used to train a classifier, which is a function that predicts, for any new item, its most likely category. It can also be used for evaluating and comparing new algorithms (not necessarily machine learning algorithms) able to determine if two elements should belong to a same category.

The issue tackled within this disclosure is the lack of pre-existing labeled datasets and often even the lack of pre-existing labels. The labels can often be chosen after the dataset has been clustered, in order to describe the items of the clusters as well as possible. The clustering can be costly in time if the dataset that needs to be clustered is large. For instance, in a dataset of p items, clustering the items in category can be done naively in a

$$\frac{p(p-1)}{2}$$

polynomial time, by comparing         items, e.g. obtaining a comparison from a source of expertise. The invention discloses a method for clustering data with minimal cost, by reducing the time needed for clustering of a factor 1/log(p) approximately. For instance, for labeling a dataset of 200 items, the naive approach requires obtaining 19900 comparisons, while the present disclosure reduces this number down to 4509 comparisons in average (a reduction by a factor 4.4).

## Summary

In some example embodiments, the disclosure provides a computer-implemented method for clustering a set of items. In some example embodiments, the clusters obtained by the computer-implemented method are such that for any couple of items, the items have more common characteristics if they belong to a same cluster than if they belong to distinct clusters.

The computer-implemented method may comprise several steps.
The computer-implemented method may comprise providing a plurality of clusters, wherein

- a cluster is a subset of items from the set of items,
- the clusters form a partition of the set of items and,
- each cluster is represented by a vertex of a clustering graph, having the following properties:

    - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
    - the clustering graph is a chordal graph.

In an example embodiment, the plurality of clusters provided may consist in clusters containing single items, each cluster containing exactly one item from the set of items.

The computer-implemented method may further select a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal. The first and the second cluster selected form a selected pair of clusters.

The computer-implemented method may further select a first item from the first cluster and a second item from the second cluster.

The computer-implemented method may further obtain cluster information associated to the first item and the second item. The cluster information states whether the first item and the second item must belong to the same cluster. In an example embodiment, the cluster information is obtained by consulting a human expert or other source of expertise. In an example embodiment, the expert consulted compares the two items selected and gives a cluster information based on a degree of similarity between the items: if the expert considers that the items have enough common characteristics, he or she gives cluster information stating that the two items must belong to the same cluster, and if they do not have enough common characteristics, he or she gives cluster information stating that the two items must not belong to the same cluster. In another example embodiment, the cluster information is obtained by consulting some other source of expertise, e.g. a database in which information about every couple of items from the set of items is stored.

If the cluster information states that the first item and the second item must belong to the same cluster, the computer-implemented method further comprises updating the clusters by merging the first cluster and the second cluster to obtain a merged cluster and updating the clustering graph by merging the first vertex and the second vertex to obtain a new vertex. The new vertex represents the merged cluster.

If the cluster information states that the first item and the second item must not belong to the same cluster, the computer-implemented method further comprises updating the clustering graph adding an edge to connect the first vertex and the second vertex. The added edge keeps the graph chordal and means that the items being part of the first cluster cannot belong to a same cluster as the items being part of the second cluster. At this point, the clusters are not updated but it is known that the selected pair of clusters cannot be merged, e.g. in future iterations.

In an example embodiment, the steps of the computer-implemented method, from the selection of the clusters to the updating of the clustering graph and eventually of the clusters according to the cluster information are iterated until a convergence criterion is satisfied. Thanks to the feature consisting in keeping the clustering graph chordal at each iteration, convergence is ensured, which means that the iterative process always terminates and cannot continue infinitely. Moreover, keeping the clustering graph chordal at each iteration optimizes the process by keeping the number of iterations before convergence low. In an example embodiment, the convergence criterion is that the clustering graph is complete.

In an example embodiment, if several pairs of clusters correspond to pairs of vertices which would keep the clustering graph chordal, the step of selecting a first cluster and a second cluster comprises selecting a first cluster which has already been selected in a previous iteration. Thanks to this feature, the cluster information may be obtained more quickly, as cluster information related to one of the clusters selected has already been consulted before. For instance, if the cluster information is obtained by consulting experts, this feature has the advantage that the expert will already know the cluster which he will be asked about, and therefore will be able to answer more quickly.

In an example embodiment, several pairs of clusters such that adding an edge to connect the corresponding pair of vertices of the clustering graph would keep the graph chordal are selected successively, and every next pair of clusters may be selected before the cluster information associated to a first item from the first cluster of the pair of clusters and a second item from the second cluster of the pair of clusters has been obtained. Hereinafter, the cluster information associated to a first item from the first cluster of the pair of clusters and a second item from the second cluster of the pair of clusters has been obtained will be referred to as the cluster information associated to the pair of clusters and is said to be positive is the cluster information states that both items selected must belong to the same cluster, and negative if the cluster information states that the two items selected must belong to different clusters. In that embodiment, if the cluster information associated to a previous pair of clusters has not been obtained yet, the next pair of clusters is selected considering that the cluster information associated to the previous pair of clusters was negative, and that an edge has been added to the clustering graph accordingly. In an example embodiment, a temporary edge is added to the clustering graph in order to be able to select the next pair of clusters while waiting to obtain the cluster information associated to the previous pair of clusters. This temporary edge will be kept if the cluster information associated to the previous pair of clusters eventually is negative, and it will be removed and the vertices it unites will be merged if the cluster information associated to the previous pair of clusters eventually is positive. Thanks to this feature, the clustering graph is always kept chordal, even when it is updated according to a cluster information that took a long time to be obtained.

In an example embodiment, the computer-implemented method further comprises implementing the clustering graph by an adjacency matrix. In an example embodiment, the computer-implemented method further comprises implementing the clustering graph as an adjacency list. In an example embodiment, the method further comprises defining a data structure to store the cluster information. In an example embodiment, this data structure may be a text file. In an example embodiment, this data structure may be an SQL database.

According to an example embodiment, the step of selecting a first cluster, represented by a first vertex of the clustering graph, and a second cluster, represented by a second vertex of the clustering graph, such that adding an edge to connect the first vertex to the second vertex would keep the graph chordal, comprises the step of testing candidate edges missing from the clustering graph one by one, until a candidate edge is found the addition of which keeps the clustering graph chordal. Testing a candidate edge consists in checking if adding that edge would keep the graph chordal. In an example embodiment, testing if adding an edge keeps the cluster graph chordal can be achieved efficiently using the work of R. E. Tarjan and M. Yannakakis, Simple linear-time algorithms to test chordality of graphs, test acyclicity of hypergraphs, and selectively reduce acyclic hypergraphs, SIAM J. Comput., 13 (1984), pp. 566-579. Thanks to this feature, it is easy to select a pair of clusters so that adding an edge to connect the corresponding pair of vertices keeps the graph chordal.

In an example embodiment, the clusters may comprise several pairs of potentially suitable clusters. A pair of potentially suitable clusters is to be understood as consisting in two clusters such that adding an edge to connect the two vertices of the clustering graph representing the two clusters would keep the graph chordal. In the presence of several pairs of potentially suitable clusters, selecting the first cluster and the second cluster comprises the steps of:

- Computing, for each pair of potentially suitable clusters, a probability that cluster information related to the pair of potentially suitable clusters would state that a first item from a cluster of the said pair of potentially suitable clusters and a second item from the other cluster of the pair of potentially suitable clusters must belong to a same cluster,
- Selecting a pair of potentially suitable clusters maximizing the said probability,
- Using the selected pair of potentially suitable clusters as the first and second clusters.

In an example embodiment, wherein there are several pairs of potentially suitable clusters, selecting the first cluster and the second cluster may comprise the steps of:

- Selecting a first cluster.
- Finding all the pairs of potentially suitable clusters containing the first cluster selected.
- Computing, for each pair of potentially suitable clusters among the pairs of potentially suitable clusters found, a probability that cluster information related to the pair of potentially suitable clusters would state that a first item from a cluster of the said pair of potentially suitable clusters and a second item from the other cluster of the pair of potentially suitable clusters must belong to a same cluster.
- Selecting a pair of potentially suitable clusters maximizing the said probability.
- Using the selected pair of potentially suitable clusters as the first and second clusters.

In an example embodiment, the probability that cluster information related to the pair of potentially suitable clusters would state that a first item from a cluster of a pair of potentially suitable clusters and a second item from the other cluster of the pair of potentially suitable clusters must belong to the same cluster is computed based on a similarity measurement between the first item and the second item. In an example embodiment, the similarity measurement between the first item and the second item is based on term frequency-inverse document frequency. In an example embodiment the similarity measurement between the first item and the second item is based on a joint complexity measurement between the items. In an example embodiment the similarity measurement between the first item and the second item is based on Levenshtein distance measurement between the items.

In an example embodiment, the probability that cluster information related to the pair of potentially suitable clusters would state that a first item from a cluster of a pair of potentially suitable clusters and a second item from the other cluster of the pair of potentially suitable clusters must belong to the same cluster is computed based on a similarity measurement between the first cluster and the second cluster. If a distance defined on individual items exists, a distance between clusters can be defined based on the distance between individual items. In an example embodiment wherein a distance defined on individual items exists, a distance between two clusters is defined as average distance between all pairs of items containing an item from the first cluster and an item from the second cluster. In an example embodiment wherein a distance defined on individual items exists, a distance between two clusters is defined as the distance between the centre of the first cluster and the centre of the second cluster. The centre of a cluster is defined as the item of a cluster which maximum distance to the other items of that cluster is minimized.

In an example embodiment, the probability that cluster information related to the pair of potentially suitable clusters would state that a first item from a cluster of a pair of potentially suitable clusters and a second item from the other cluster of the pair of potentially suitable clusters must belong to the same cluster is computed thanks to a supervised learning algorithm trained with the clusters. In an example embodiment, a cluster from a potentially suitable pair of clusters is selected to be tested, and the supervised learning algorithm is trained with all the clusters except the tested cluster. In an example embodiment, the tested cluster is further given as an input to the supervised learning algorithm, which calculates the probability that the cluster tested can be merged with the other cluster from the pair of potentially suitable clusters to which it belongs. In an example embodiment, a randomly selected item in the tested cluster is given as an input to the supervised learning algorithm, which calculates the probability that the item from cluster tested belongs the other cluster from the pair of potentially suitable clusters. In an example embodiment, the supervised learning algorithm is selected among a support vector machine algorithm, a decision tree and a Bayes classifier.

In some example embodiments, the disclosure provides a computer-implemented method for clustering a set of items, wherein the items are images.

In example embodiments, the disclosure also provides a computer program comprising executable code that causes a computer to perform the steps of such method when executed.

In some example embodiments, the disclosure provides a computer-implemented method for training a classifier, wherein the classifier is trained using the clusters obtained by the disclosed method for clustering a set of items. In an example embodiment, the items are images and the classifier is a computer vision model classifying the items thanks to object recognition or object detection.

In an example embodiment, the disclosure provides a computer-implemented method for rating a classification algorithm based on the clusters obtained thanks to the disclosed method for clustering, wherein

- The set of items is split into a training subset of items and a testing subset of items
- The clusters containing items from the training subset of items are used as classes for the algorithm so that the algorithm builds a classifier, wherein the classifier is able to assign one of the said classes to any item from the set of items it is given as an input
- Items from the testing subset of items are used to rate the classification algorithm, wherein rating the classification algorithm comprises the following steps:

    - Giving at least one item from the testing subset of items as an input to the classifier in order to be assigned a class among the said classes
    - Rating the algorithm based on the number of items from the testing set of items which were assigned by the classifier to a class corresponding to the cluster they belong to

In an example embodiment, the algorithm is rated using the the Rand Index, which is defined in W. M. Rand (1971). "Objective criteria for the evaluation of clustering methods". Journal of the American Statistical Association. American Statistical Association. 66 (336): 846-850). In another example embodiment, the algorithm is rated using the Transfer distance, which consists in counting the number of elementary operations required to transform one cluster into another.

In an example embodiment, each cluster is split in a first subset of items from the cluster and a second subset of items from the cluster. The training subset from the set of items is further obtained by taking the items from the first subset of items from each cluster, and the testing subset of items is obtained by taking the items from the second subset of items from each cluster. In an example embodiment, the first subset of items from each cluster corresponds to half of the items of this cluster (or N/2+1 if the cluster contains an uneven number N of items).

In an example embodiment, the rated algorithm is an algorithm that inputs a question and returns the most suited answer from a given list of possible answers. In an example embodiment, several classification algorithms are rated in order to choose a best classification algorithm based on the rating.

In some example embodiments, the disclosure provides an apparatus for clustering a set of items. The apparatus clustering a set of items may comprise at least one processor and at least one memory including computer program code. The at least one memory and the computer program code may be configured to, with the at least one processor, cause the apparatus to:

- Provide a plurality of clusters, wherein

    - a cluster is a subset of items from the set of items,
- the clusters form a partition of the set of items and,
- each cluster is represented by a vertex of a clustering graph, wherein:

    - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
    - the clustering graph is a chordal graph,

    - Select a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
    - Select a first item from the first cluster and a second item from the second cluster
    - Obtain cluster information associated to the first item and the second item, wherein the cluster information states whether the first item and the second item must belong to the same cluster
    - If the cluster information states that the first item and the second item must belong to the same cluster, update the clustering by merging the first cluster and the second cluster to obtain a merged cluster and update the clustering graph by merging the first vertex and the second vertex to obtain a new vertex, wherein the new vertex represents the merged cluster
    - If the cluster information states that the first item and the second item must not belong to the same cluster, update the clustering graph adding an edge to connect the first vertex and the second vertex, wherein the added edge keeps the graph chordal and wherein the added edge means that the items being part of the first cluster do not belong to a same cluster as the items being part of the second cluster.

In some example embodiments, the at least one memory and the computer program code may be configured to with the at least one processor, cause the apparatus to iterate the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

In an example embodiment, the criterion of convergence is that the clustering graph is complete.

In some example embodiments, the disclosure also provides an apparatus comprising:

- A providing circuitry configured to providing a plurality of clusters, wherein

  - a cluster is a subset of items from the set of items,
  - the clusters form a partition of the set of items and,
  - each cluster is represented by a vertex of a clustering graph, wherein

    - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
    - the clustering graph is a chordal graph,

  - A selection circuitry configured to

    - Select a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
    - Select a first item from the first cluster and a second item from the second cluster

- An information circuitry configured to obtain cluster information associated to the first item and the second item, wherein the cluster information states whether the first item and the second item must belong to the same cluster
- An updating circuitry configured to:

  - If the cluster information states that the first item and the second item must belong to the same cluster, update the clustering by merging the first cluster and the second cluster to obtain a merged cluster and update the clustering graph by merging the first vertex and the second vertex to obtain a new vertex, wherein the new vertex represents the merged cluster
  - If the cluster information states that the first item and the second item must not belong to the same cluster, update the clustering graph adding an edge to connect the first vertex and the second vertex, wherein the added edge keeps the graph chordal and wherein the added edge means that the items being part of the first cluster do not belong to a same cluster as the items being part of the second cluster

In an example embodiment, the disclosure also provides an apparatus providing an iteration circuitry configured to iterate the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

In an example embodiment, the convergence criterion is that the clustering graph is complete.

In some example embodiments, the disclosure also provides an apparatus, e.g. an apparatus for clustering a set of items, comprising:

- Means for providing a plurality of clusters, wherein

  - a cluster is a subset of items from the set of items,
  - the clusters form a partition of the set of items and,
  - each cluster is represented by a vertex of a clustering graph, wherein

    - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
    - the clustering graph is a chordal graph,

- Means for selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Means for selecting a first item from the first cluster and a second item from the second cluster
- Means for obtaining cluster information associated to the first item and the second item, wherein the cluster information states whether the first item and the second item must belong to the same cluster
- Means for, if the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

- Means for if the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

In some example embodiments, the apparatus, e.g. an apparatus for clustering a set of items, further comprises means for iterating the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.
In an example embodiment, the convergence criterion is that the clustering graph is complete.

In some example embodiments, the means in the apparatus further comprises:

at least one processor; and
at least one memory including computer program code, the at least one memory and computer program code configured to, with the at least one processor, cause the performance of the apparatus.

In an example embodiment, an apparatus for configuring a communication network, the apparatus comprising at least one processor and at least one memory including computer program code;
the at least one memory and the computer program code configured to, with the at least one processor, cause the apparatus at least to perform:

- Providing a plurality of clusters, wherein

    - a cluster is a subset of items from the set of items,
    - the clusters form a partition of the set of items and,
    - each cluster is represented by a vertex of a clustering graph, wherein

        - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
        - the clustering graph is a chordal graph,

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster

In an example embodiment, an apparatus for configuring a communication network, the apparatus comprising at least one processor and at least one memory including computer program code;

the at least one memory and the computer program code configured to, with the at least one processor, cause the apparatus at least to perform: iterating the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster

In an example embodiment, a non-transitory computer readable medium comprising program instructions for causing an apparatus to perform at least the following:

- Providing a plurality of clusters, wherein

    - a cluster is a subset of items from the set of items,
    - the clusters form a partition of the set of items and,
    - each cluster is represented by a vertex of a clustering graph, wherein

        - the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
        - the clustering graph is a chordal graph,

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster

In an example embodiment, a non-transitory computer readable medium comprising program instructions for causing an apparatus to perform at least the following: iterating the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

**Brief description of the drawings**

These and other aspects of the invention will be apparent from and elucidated with reference to example embodiments described hereinafter, by way of example, with reference to the drawings.

Figure 1 represents a process to construct and update a chordal graph, step by step, in order to implement a clustering method according to an example embodiment. In Fig. 1, a set of five items is taken as an example to progressively construct a chordal graph that will help clustering the set of items.
Figure 2 represents the successive clusters obtained thanks to the construction process of the chordal graph in Fig. 1.
Figure 3a. is a chordal graph.
Figure 3b. is a graph which is not chordal.
Figure 4 represents a process which can be applied to the graph of Fig. 1 to choose the order in which it is constructed.
Figure 5 represents some steps of the process of Fig. 1, which show how the clusters and the items they contain are used to update the graph.
Figure 6 is a functional representation of a method using the clustering obtained in Fig. 2 thanks to the process of Fig. 1 to train a computer vision model.
Figure 7 is a functional representation of a method using the clustering obtained in Fig. 2 thanks to the process of Fig. 1 to evaluate and compare algorithms.
Figure 8 is a functional diagram of a programmed computer in which example embodiments of the invention may be implemented.

**Detailed description of the embodiments**

Given a set of items, the disclosure aims at clustering the items. In an example embodiment, the clusters obtained have the following property: for any couple of items, the items have more common characteristics if they belong to a same cluster than if they belong to distinct clusters. That means clustering obtained in the end will consist in clusters so that:

- Two items from a same cluster have common characteristics

- Two items from two distinct clusters have different characteristics.

Given an initial set of clusters, where the set of clusters is a partition of the set of items, a clustering graph is defined, where:

- Every vertex represents a cluster
- Every edge represents the fact that two clusters are distinct, which implies that, for any edge connecting two vertices, the items belonging to the cluster represented by one of those two vertices cannot belong to the cluster represented by the other vertex.

In an example embodiment, a vertex corresponds to items which are "similar" and an edge between two vertices represents the fact that, given a couple of items where the first item belongs to the cluster represented by one of the two vertices and the second item belongs to the cluster represented by the other vertex are "different". For instance, in an example embodiment where the items are pictures of animals, every vertex corresponds to a cluster containing pictures of the same animal, and an edge between two vertices means that the corresponding clusters contain pictures of different animals (for instance a cluster containing pictures of cats and the other one containing pictures of dogs). The initial set of clusters and the clustering graph are updated by the methods and apparatuses disclosed in the invention in order to obtain another clustering and another clustering graph. In an example embodiment, the set of clusters and the clustering graph are updated until a convergence criterion is satisfied. In order to optimize the speed of convergence, the clustering graph is kept chordal at each iteration.

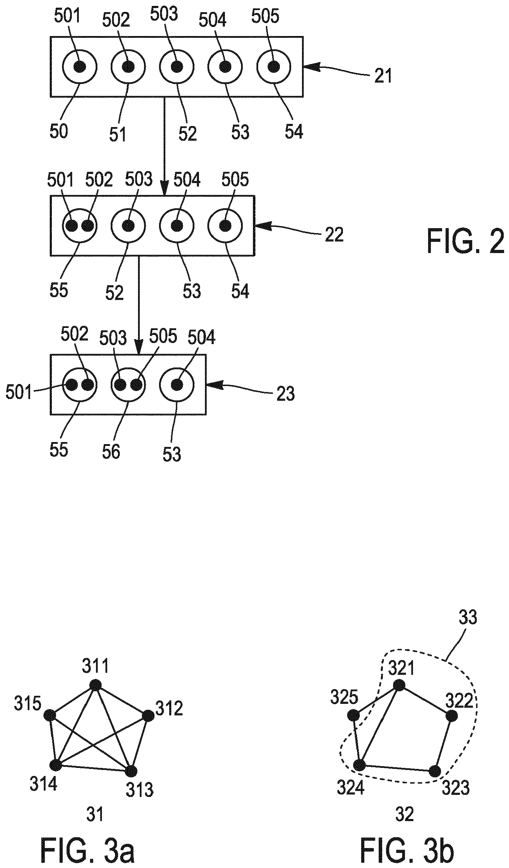

A chordal graph is a graph in which every cycle of length higher than three contains at least a chord. Such a graph is represented by the chordal graph 31 in Fig. 3a. Every cycle of this graph of length higher than three has a chord. For instance, the vertices 311, 312, 313, 314 and 315 define a cycle of length four, which has a chord, which is the edge connecting vertex 314 to vertex 312. Likewise the vertices 311, 312, 313, 314 and 315 define a cycle of length five, which has two chords: the edge connecting vertex 311 to vertex 314 and the edge connecting vertex 314 to vertex 312. On the contrary, Fig. 3b shows a non-chordal graph 32. Indeed, the vertices 321, 322, 323 and 324 of the non-chordal graph 32 define a cycle 33 of length four, which has no chord, which means there is no edge connecting two vertices of the cycle which are nonadjacent in the cycle.

In an example embodiment, such a criterion of convergence for the iterative process of updating the set of clusters and the clustering graph may be that it is certain that, given two clusters, the items from one cluster cannot belong to the other cluster. In an example embodiment, this convergence criterion is that the clustering graph is complete, which may mean that the items from a same cluster have more common characteristics than the items from different clusters. In an example embodiment, the clusters obtained when the clustering graph is complete may be labelled as different classes.

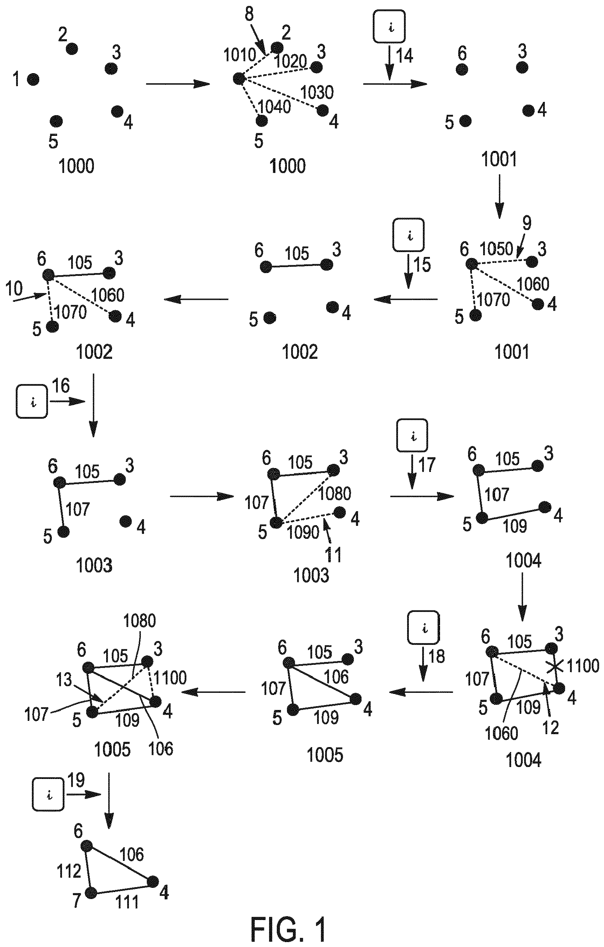

In an example embodiment, no prior relation between the items of the group of items is supposed to be known, so the items are separated into clusters of size one, and associated to a clustering graph, where each vertex represents an item and where there are no edges. Such a graph is depicted in Fig. 1, by graph 1000, which has five vertices. Every vertex of the graph 1000 corresponds to a cluster of a single element. The corresponding clusters are represented by cluster 21 in Fig. 2:

- Vertex 1 corresponds to cluster 50, which has a single element 501
- Vertex 2 corresponds to cluster 51, which has a single element 502
- Vertex 3 corresponds to cluster 52, which has a single element 503
- Vertex 4 corresponds to cluster 53, which has a single element 504
- Vertex 5 corresponds to cluster 54, which has a single element 505

Fig. 1 and 2 taken together show the process that is applied to a set of items in order to cluster it according to an example embodiment. Fig. 2 represents the successive sets of clusters obtained and Fig. 1 represents the successive clustering graphs. That process is the following:

- Separate the items in clusters containing exactly one item each, so that the clusters form a partition of the set of items
- Select a pair of clusters consisting in a first cluster and a second cluster so that adding an edge to connect the corresponding vertices in the clustering graph keeps the graph chordal
- Select one item from each of the selected clusters
- Obtain cluster information associated to the selected items, which states whether they must belong to the same cluster or not.
- If the cluster information states that the selected items must belong to the same cluster, which may mean that they have a certain number of characteristics in common, update the set of clusters by merging the selected clusters and update the clustering graph by merging the first vertex and the second vertex to obtain a new vertex, which represents the merged cluster
- If the cluster information states that the selected items must not belong to the same cluster, update the clustering graph by adding an edge to connect the vertices representing the selected clusters.

Given the choice of the clusters wherein the adding an edge always keeps the graph chordal.

Fig. 1 shows how this process is implemented to update the graph. The corresponding set of clusters obtained are represented in Fig. 2. In that example, six successive clustering graphs are obtained, corresponding to three different sets of clusters. The steps to obtain the clustering graphs and the corresponding sets of clusters are the following:

- Graph 1000, consisting in vertices 1, 2, 3, 4, 5, corresponds to the set of clusters 21, consisting in five clusters, each one containing a single item.
- Cluster 50, represented by vertex 1, is selected. From vertex 1, there are four potential edges which would keep the graph chordal: potential edge 1010 connecting vertex 1 to vertex 2, potential edge 1020 connecting vertex 1 to vertex 3, potential edge 1030 connecting vertex 1 to vertex 4, and potential edge 1040 connecting vertex 1 to vertex 5. A cluster corresponding to one of those vertices is selected alongside cluster 50 which corresponds to vertex 1. In the example depicted in Fig. 1, the second cluster selected corresponds to adding edge 1010, as shown by arrow 8. It is the cluster corresponding to vertex 2, i.e. cluster 51. Thus, the selected pair of clusters is: (cluster 50, cluster 51). An item is selected from each of the clusters. As there is only one item per cluster, this corresponds to item 501 and item 502.
- Cluster information corresponding to the selected items is obtained, as shown by arrow 14.
- In this particular example, the cluster information states that the two items must belong to the same cluster so clusters 50 and 51 are merged to form a new cluster 55, which now contains items 501 and 502. The corresponding vertex is vertex 6, represented with a lighter colour in Fig. 1 to show that it corresponds to a merged cluster, which therefore contains more than one item. The new clustering 22 and the new clustering graph 1001 is obtained.
- From the set of clusters 22, cluster 55, which corresponds to vertex 6 in the clustering graph 1001 is first selected. From vertex 6, there are three potential edges which would keep the graph chordal: potential edge 1050 connecting vertex 6 to vertex 3, potential edge 1060 connecting vertex 6 to vertex 4, and potential edge 1070 connecting vertex 6 to vertex 5. The second cluster selected corresponds to adding potential edge 1050, as shown by arrow 9. It is cluster 52, represented by vertex 3. Thus, the selected pair of clusters is: (cluster 55, cluster 52). An item is selected from each of the clusters.
- Cluster information corresponding to the selected items is obtained, as shown by arrow 15.
- In this particular example, the cluster information states that the two items must not belong to the same cluster, so a new edge 105 is added between vertex 6 and vertex 3, which represent the clusters from which the items have been selected. A new clustering graph 1002 is obtained and the set of clusters does not change. At this point, it is however known that clusters 55 and 52 cannot be merged.
- From the set of clusters 22, cluster 55, which corresponds to vertex 6 in the clustering graph 1002 is first selected. From vertex 6, there are two potential edges which would keep the graph chordal, which are the potential edges connecting vertex 6 to the vertices representing the clusters which have not been selected in the previous step: potential edges 1060 and 1070. The second cluster selected corresponds to adding potential edge 1070, as shown by arrow 10. It is cluster 54, represented by vertex 5. Thus, the selected pair of clusters is: (cluster 55, cluster 54). An item is selected from each of the clusters.
- Cluster information corresponding to the selected items is obtained, as shown by arrow 16.
- In this particular example, the cluster information states that the two items must not belong to the same cluster, so a new edge 107 is added between vertex 6 and vertex 5, which represent the clusters from which the items have been selected. A new clustering graph 1003 is obtained and the set of clusters does not change. At this point, it is however known that clusters 55 and 54 cannot be merged.
- From the set of clusters 22, cluster 54, which corresponds to vertex 5 in the clustering graph 1003 is first selected. From vertex 5, there are two potential edges which would keep the graph chordal: potential edges 1080 and 1090. The second cluster selected corresponds to adding potential edge 1090, as shown by arrow 11. It is cluster 53, represented by vertex 4. Thus, the selected pair of clusters is: (cluster 54, cluster 53). An item is selected from each of the clusters. As each one of the selected clusters contains a single item, the selected items are item 505 from cluster 54 and item 504 from cluster 53.
- Cluster information corresponding to the selected items is obtained, as shown by arrow 17.
- In this particular example, the cluster information states that the two items must not belong to the same cluster, so a new edge 109 is added between vertex 5 and vertex 4, which represent the clusters from which the items have been selected. A new clustering graph 1004 is obtained and the set of clusters does not change. At this point, it is however known that clusters 53 and 54 cannot be merged.
- From the set of clusters 22, cluster 53, which corresponds to vertex 4 in the clustering graph 1004 is first selected. From vertex 4, there is only one potential edge which would keep the graph chordal: potential edges 1060 connecting vertex 4 to vertex 6. Indeed, the other potential edge which would connect vertex 4 to another vertex (and which doesn't already exist) is edge 1100, which appears crossed on Fig. 1. The crossed edge 1100 does not keep the graph chordal because, if it was added, the graph would have a cycle of length four (vertices 3, 4, 5, 6) with no chords. Therefore, the second cluster selected corresponds to adding potential edge 1060 (which is the only potential edge that can be added to keep the graph chordal), as shown by arrow 12. It is cluster 55, represented by vertex 6. Thus, the selected pair of clusters is: (cluster 53, cluster 55). An item is selected from each of the clusters.

- Cluster information corresponding to the selected items is obtained, as shown by arrow 18.

- In this particular example, the cluster information states that the two items must not belong to the same cluster, so a new edge 106 is added between vertex 6 and vertex 4, which represent the clusters from which the items have been selected. A new clustering graph 1005 is obtained and the set of clusters does not change. At this point, it is however known that clusters 55 and 52 cannot be merged.

- From the set of clusters 22, cluster 52, which corresponds to vertex 3 in clustering graph 1005 is first selected. From vertex 53, there are two potential edges which would keep the graph chordal: potential edge 1080 connecting vertex 3 to vertex 5 and potential edge 1100 connecting vertex 3 to vertex 4. In the clustering graph 1005, the potential edge 1100 would keep the graph chordal, unlike in the clustering graph 1004. Indeed, in the clustering graph 1005, if the potential edge 1100 is added, the cycle of vertices 3, 4, 5, 6 now has a chord, which is edge 106. The second cluster selected corresponds to adding potential edge 1080, as shown by arrow 13. It is cluster 54, represented by vertex 5. Thus, the selected pair of clusters is: (cluster 52, cluster 54). An item is selected from each of the clusters.

- Cluster information corresponding to the selected items is obtained, as shown by arrow 19.

- In this particular example, the cluster information states that the two items must belong to the same cluster. Therefore, clusters 52 and 54 are merged in a new cluster 56, and a new set of clusters 23 is obtained. It corresponds to the clustering graph 1006. To obtain the clustering graph 1006 from the clustering graph 1005, vertex 3 is merged with vertex 5, to form a new vertex 7. By doing this, edges 107 and 105 are also merged, to form edge 112. As vertex 5 was connected to vertex 4 in the clustering graph 1005, vertex 7 also needs to be connected to vertex 4 with an edge, which is edge 111, former edge 109. The clustering graph 1006 is complete, which means that the final set of clusters has been obtained. This set of clusters consists in cluster 55, containing items 501 and 502, cluster 56, containing items 503 and 505, and cluster 53, containing item 504.

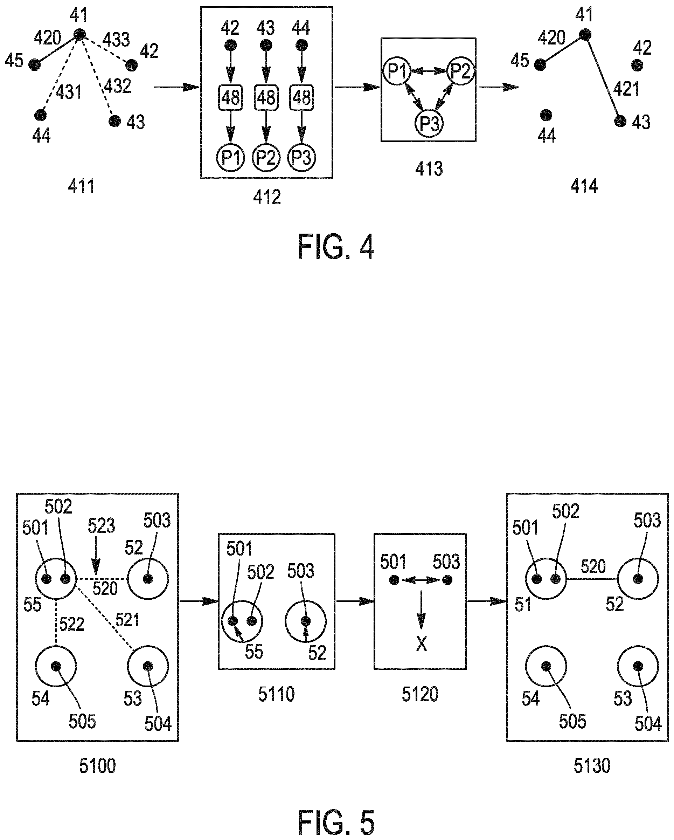

Fig. 5 shows how the items from the clusters are used in practice to update the clustering graph of Fig. 1, step by step. Steps 5100, 5110, 5120 of Fig. 5 correspond to the updating of the clustering graph 1001 of Fig. 1, using the set of clusters 22 and the cluster information obtained as represented by arrow 15 in Fig. 1. Step 5130 of Fig. 5 corresponds to adding edge 102 to the clustering graph 1001 in order to obtain the clustering graph 1002. Given the set of clusters 22, step 5100 of Fig. 5 represents the choice of a pair of clusters among several potentially suitable pairs of clusters, wherein a potentially suitable pair of clusters is represented in the clustering graph 1001 by a pair of vertices such that adding an edge to connect those vertices would keep the clustering graph 1001 chordal. The potentially suitable pairs of clusters are represented by potential links 520, 521 and 522, which respectively correspond to the pairs of clusters (cluster 55, cluster 52), (cluster 55, cluster 53), (cluster 55, cluster 54). In the particular case of Fig. 5, the selected pair of clusters among the potentially suitable pairs of clusters is the pair of clusters (cluster 55, cluster 52), as shown by arrow 523.

After selecting a pair of clusters, the next step, represented by step 5110, consists in selecting an item from each cluster from the pair of clusters. In step 5110 of Fig. 5, item 501 is selected from cluster 55, and item 503 is selected from cluster 52 (as it is the only item in cluster 52).

After the selection of the items, step 5120 represents the obtention of the cluster information associated to the items selected. The cluster information states whether the items selected must belong to the same cluster or not. In an example embodiment, an expert compares the items selected to decide if they present enough similarities to belong to the same cluster. In an example embodiment, the expert is a human. In step 5120, the cluster information states that items 501 and 503 must not belong to the same cluster.

Finally, step 5130 shows the set of clusters after obtaining the information. The link 520 between cluster 51 and cluster 52 symbolizes the edge that is added to the clustering graph in order to materialize the fact that clusters 51 and 52 cannot be merged. After step 5130, the set of clusters is still the set of clusters 22 but the clustering graph has been updated to the clustering graph 1002.

Fig. 4 shows a way to select a pair of clusters is selected when there are several potentially suitable pairs of clusters so that adding an edge to connect the pair of vertices representing the pair of clusters in the clustering graph would keep the graph chordal, in an example embodiment.

Graph 411 has five vertices: vertices 41, 42, 43, 44, 45 and one edge 420. In the example embodiment depicted in Fig. 4, a first cluster is selected. In the example of Fig. 4, that first cluster is the cluster represented by vertex 41. To form a pair, it is necessary to select a second vertex, which may request to choose between several potentially suitable pairs of vertices including vertex 41. From vertex 41, three potential edges would keep the graph 411 chordal if they were added: potential edge 431 connecting vertex 41 to vertex 44, potential edge 432 connecting vertex 41 to vertex 43 and potential edge 433 connecting vertex 41 to vertex 42. Therefore, there are three potentially suitable pairs of clusters, corresponding to the potentially suitable pairs of vertices (vertex 41, vertex 42), (vertex 41, vertex 42) and (vertex 41, vertex 42).

In step 412, an algorithm 48 computes for each potentially suitable pair of vertices, the probability that, if the corresponding pair of clusters is selected, the cluster information associated to a pair of items from the pair of clusters is positive, which means that it would state that both items from the pair of items must belong to the same cluster. A pair of items from the pair of clusters should be understood here as a pair of items in which the first item is selected within the items of the first cluster of the pair of clusters and the second item is selected within the items of the second cluster of the pair of clusters. In Fig. 4, there are three probabilities computed, P1, P2, P3, associated respectively to the pairs of clusters corresponding to the pairs of vertices (vertex 41, vertex 42), (vertex 41, vertex 42) and (vertex 41, vertex 42). In an example embodiment, the computed probability is a mean of the probability that the cluster information associated to a pair of items from the pair of clusters will be positive for every pair of items from the pair of clusters. In another example embodiment, the probability is computed for a pair of items from the pair of clusters where the items are randomly chosen from the clusters.

In an example embodiment, algorithm 48 performs a similarity measurement between the items. In an example embodiment, the similarity measurement can be a cosine similarity measurement.

In an example embodiment where the items are text data, this similarity measurement can be based on a method selected among a term frequency-inverse document frequency similarity between the items, a joint complexity measurement between the items and a Levenshtein distance measurement between the items. In another example embodiment, algorithm 48 is a supervised learning algorithm trained with the clusters from the current set of clusters except the cluster which is being tested. The cluster which is being tested is to be understood as one of the clusters from a potentially suitable pair of clusters corresponding to a potentially suitable pair of vertices. As the potentially suitable pairs of clusters are considered once the first cluster has been selected, the cluster which is being tested is every cluster different from the first cluster and which is from a potentially suitable pair of clusters containing the first cluster. The tested cluster is given as an input to the supervised learning algorithm and the supervised learning algorithm returns a probability that the tested cluster can be merged with the first cluster selected. In Fig. 4, the first cluster selected is the represented by vertex 41 and the cluster tested will be successively the cluster represented by vertex 42, the cluster represented by vertex 43 and the cluster represented by vertex 44. In an example embodiment, it is not the entire cluster that is given as an input to the supervised learning algorithm, but only an item randomly chosen from the cluster. In that embodiment, the supervised learning algorithms computes the probability that the item chosen can belong to the first cluster selected.

<<In an example embodiment, algorithm 48 is variable depending on the nature of the tested cluster. If the tested cluster consists of a single item, algorithm 48 is a supervised learning algorithm trained with the clusters which contain at least two items. If the tested cluster has at least two items; algorithm 48 performs a similarity measurement between the items of the cluster which is being tested and the first cluster selected.>> In an example embodiment, the supervised learning algorithm is selected among a supervised vector machine algorithm, a decision tree and a Bayes classifier.

In step 413 of Fig. 4, the probabilities computed at the previous step are compared in order to select the highest probability (or a highest probability if there are several probabilities which are equal among the ones computed). The cluster corresponding to the highest probability is selected as the second cluster from the pair of clusters. Cluster information is effectively obtained for a pair of items from the pair of clusters and the clustering graph is updated accordingly. Selecting a second cluster that maximizes the probability that the cluster information associated to the pair (first cluster, second cluster) is positive is useful to reduce the cost of the clustering. Indeed, merging clusters (which happens when the cluster information is positive) rather than adding an edge between vertices of the clustering graph (which happens when the cluster information is positive) contributes much more to the ultimate goal of reducing the cost of the clustering. For instance, in an embodiment in which obtaining cluster information means asking a question about a pair of items to an expert, maximizing the probability that an asked question will result in merging clusters reduces the number of questions asked to experts.

In the example of Fig. 4, the biggest probability is P2, which corresponds to the cluster represented by vertex 43. Cluster information is obtained, associated to a pair of items from the pair of clusters (cluster 41, cluster 43) and the clustering graph 411 is updated in the clustering graph 414. In the example of Fig. 4, the updated graph still has five vertices and an edge 421 has been added, which means that the clusters represented respectively by vertices 41 and 43 cannot be merged. This is possible, as what is computed at step 412 are probabilities. Even if, at step 413, the highest probability is selected, it does not ensure that the pair of clusters resulting from this process will lead to a positive cluster information. For instance, if the highest probability is of 20%, there are 80% chances that the cluster information will be negative, even if the pair of clusters chosen maximizes the probability that the cluster information will be positive. Thus, the resulting updated clustering graph may be a graph in which an edge has been added, like clustering graph 414.

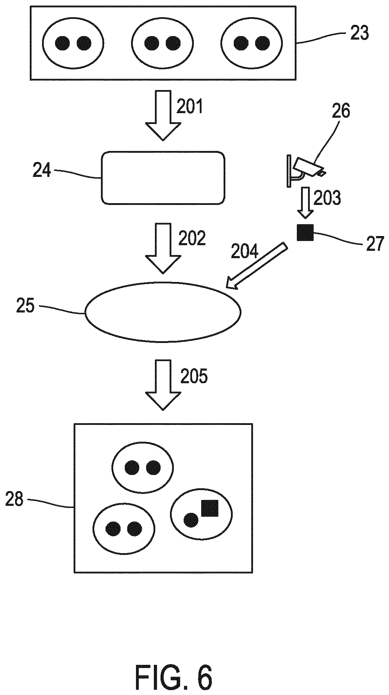

Fig. 6 shows how the clusters obtained with the process depicted in Fig. 1 are used to train a classifier, according to an example embodiment. In that embodiment, the items are images. The set of clusters 23, which is obtained in Fig. 2 with the process of Fig. 1 is labelled and then given are used as a training set 201 for a classifier 24, which is a computer vision model. In an example embodiment, the classifier 24 may be based on object recognition. For instance, it may be used to analyse images captured by cameras on an industrial site, in order to determine if an equipment has been installed correctly. In an example embodiment, the classifier 24 may be based on object recognition. For instance, it may be used to analyse images captured by a security camera, in order to give access to persons to a building using face recognition.

After the training, symbolized with arrow 202, the classifier 24 becomes a trained operational classifier 25. It is then possible to give as an input 204 a new image 27 recorded with camera 26. The step of recording the new image 27 with camera 26 before inputting it into the trained operational classifier 25 is represented with arrow 203.

The trained operational classifier gives an output 205 consisting in a classification 28, where the unknown image 27 has been classified in one of the clusters obtained with the process of Fig. 1. The unknown image 27 is represented with a square, whereas the items which have been clustered with the process shown in Fig. 1 are represented with rounds. It is therefore easy to see that in the example of Fig. 6, the unknown image has been classified in a class corresponding to cluster 53. It is possible to talk of classes instead of clusters as the clusters have been labelled prior to the training of the classifier.

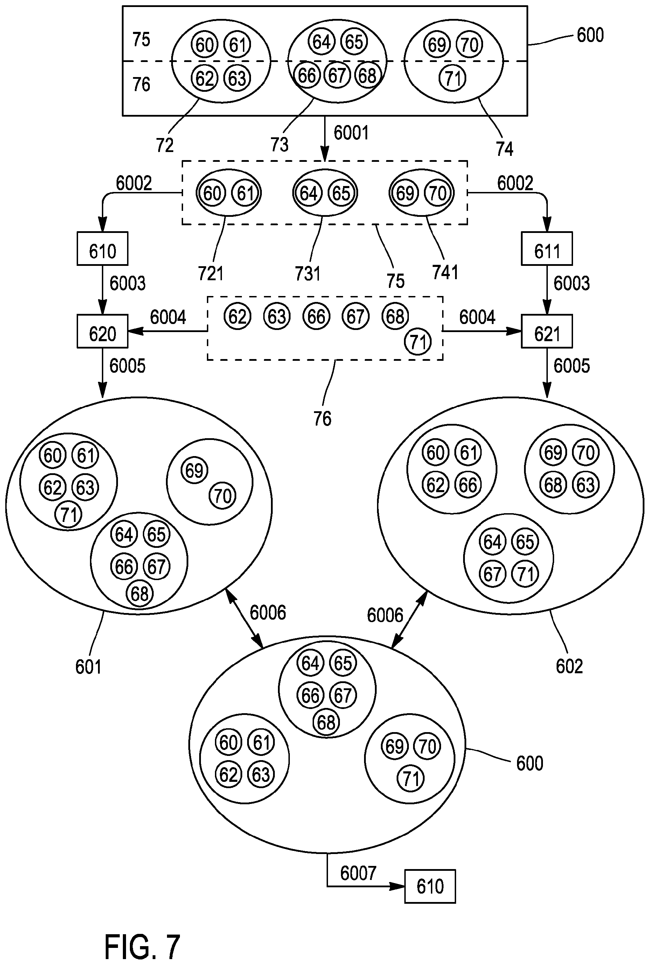

Fig. 7 shows an application of clustering a set of items with a method like the one disclosed, according to an example embodiment. According to an example embodiment, the clusters obtained by such a process can be used as ground truth data to evaluate and compare algorithms. In Fig. 7, algorithms 610 and 611 need to be compared. Those algorithms are intended for comparing a new item to the items from the set of items and provide a subset of the set of items in which the items are similar to the new item. In the context of computer support, for instance, many problems are submitted to technicians, and they often have already been solved once before. An algorithm like algorithms 610 and 611 finds previous problems which are similar to a new problem submitted to the computer support, in order to automatically propose a solution to the new problem which is similar to the previous similar problems. Such an algorithm partly performs a clustering, as it returns only a cluster corresponding to the item presented as an input. In an example embodiment, such algorithms are algorithms that input a question and return the most suited answer from a given list of possible answers. The problem is that different algorithms may output different clusters and can only be compared if there is data recognized as true (ground truth data) to compare their output with. The method disclosed gives a clustering of a set of items which can be used as ground truth data in an example embodiment to compare algorithms. In fact, the clusters obtained by the method disclosed are used as classes, which limits the possibilities for the partial clustering provided by the algorithms. Indeed, the clustering provided by an algorithm given a new item will actually be the class (a class corresponding to one of the clusters obtained thanks to the method disclosed in the invention) to which it belongs.

In Fig. 7, the set of items contains 12 items: item 60, item 61, item 62, item 63, item 64, item 65, item 66, item 67, item 68, item 69, item 70. The set of clusters 600 obtained with the method disclosed in the present invention (for instance a process similar to the one of Fig. 1) consists in three clusters : cluster 72, containing items 60, 61, 62 and 63, cluster 73, containing items 64, 65, 66, 67, 68, and cluster 74, containing items 69, 70, 71. First, each cluster is split in two. At the scale of the set of items, this results in two subsets of items from the set of items: a training set 75 and a testing set 76. The training set is obtained as shown by arrow 6001. It consists in three training clusters, each training cluster being a subset of one of the clusters from the set of clusters 600 obtained with the method disclosed in the invention. The training cluster 721 contains items 60 and 61 from the training set 75, the training cluster 731 contains items 64 and 65 from the training set 75 and the training cluster 721 contains items 69 and 70 from the training set 75. Those training clusters are used as classes for the classification algorithm as shown by arrow 6002. This enables to build two classifiers, one for each algorithm, respectively classifier 620 and 621 for algorithm 610 and 611, as shown by arrow 6003. Afterwards, the items from the testing set 76 are successively given as an input to each classifier, as shown by arrow 6004, so that they provide a classification of all the items, based on the classes defined by the training clusters 721, 731 and 741. This means that the items from the set of items are either assigned to the class defined by the training cluster 721, either to the class defined by the training cluster 731, either to the class defined by the training cluster 741. The classification process is represented with arrow 6005 and results respectively in classification 601 for algorithm 610 and classification 602 for algorithm 611. Those classifications are then compared with the set of clusters 600 as shown by arrow 6006, in order to count the number of classes to which the items from the testing set have been assigned correctly. In classification 601, items 62, 63, 66, 67 and 68 have been assigned correctly. In classification 602, items 62 and 67 have been assigned correctly. This enables to choose the best algorithm, as shown by arrow 6007. The best algorithm is here algorithm 610 because its classifier managed to assign 5 items out of 6 from the testing set to the correct class, whereas algorithm 611 only managed to assign 2 items out of 6 from the testing set to the correct class. The fact that algorithm 610 managed to assign more items to the correct class ensures that when a new item is given as an input to algorithm 610, it will provide a class of items similar to the new item with higher probability.

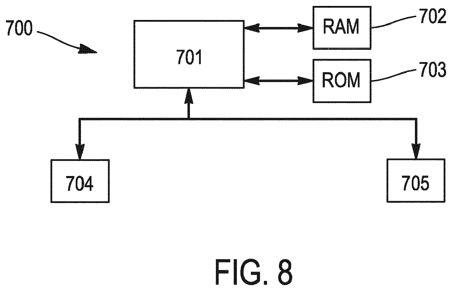

Fig. 8 shows a functional diagram of a programmed computer, server, circuitry, or apparatus 800 that may be used for that purpose. Computer 700 has a core and several peripherals connected via a communication bus. The major components of the core are a microprocessor 701 (often called the CPU) random access memory (RAM) 702 and read only memory (ROM) 703. The peripherals comprise devices that allow information to be input to the system from users, output to users and stored and retrieved (mass storage devices 804 such as hard disks and network interfaces 705).

The invention is not limited to the described example embodiments. The appended claims are to be construed as embodying all modifications and alternative constructions that may occur to one skilled in the art, and which fairly fall within the basic teaching as set forth herein.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

## Claims

1. A computer-implemented method for clustering a set of items, wherein the method comprising the steps of:

- Providing a plurality of clusters, wherein

- a cluster is a subset of items from the set of items,
- the clusters form a partition of the set of items and,
- each cluster is represented by a vertex of a clustering graph, wherein

- the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
- the clustering graph is a chordal graph,

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

**2.** A computer-implemented method according to claim 1, wherein the clusters comprise several pairs of potentially suitable clusters, wherein a pair of potentially suitable clusters consists in two clusters such that adding an edge to connect the two vertices of the clustering graph representing the two clusters would keep the graph chordal, and wherein selecting the first cluster and the second cluster comprises the steps of:

- Computing, for each pair of potentially suitable clusters, a probability that cluster information related to the pair of potentially suitable clusters would state that a first item from a cluster of the said pair of potentially suitable clusters and a second item from the other cluster of the pair of potentially suitable clusters must belong to a same cluster,
- Selecting a pair of potentially suitable clusters maximizing the said probability,
- Using the selected pair of potentially suitable clusters as the first and second clusters.

**3.** A computer-implemented method according to claim 2, wherein the probability that cluster information related to the pair of potentially suitable clusters would state that a first item from a cluster of a pair of potentially suitable clusters and a second item from the other cluster of the pair of potentially suitable clusters must belong to the same cluster is computed based on a similarity measurement between the first item and the second item.

**4.** A computer-implemented method according to claim 3, wherein the probability that cluster information related to the pair of potentially suitable clusters would state that a first item from a cluster of a pair of potentially suitable clusters and a second item from the other cluster of the pair of potentially suitable clusters must belong to the same cluster is computed thanks to a supervised learning algorithm trained with the clusters.

**5.** A computer-implemented method according to claim 4, wherein the supervised learning algorithm is selected among a support vector machine algorithm, a decision tree and a Bayes classifier.

**6.** A computer-implemented method according to any one of claims 1 to 5, wherein the method comprises iterating the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

**7.** A computer-implemented method according to claim 6 wherein the convergence criterion is that the clustering graph is complete.

**8.** A computer-implemented method according to any one of claims 6 and 7, wherein there is an iteration for which the clusters comprise several pairs of potentially suitable clusters wherein a pair of potentially suitable clusters consists in two clusters such that adding an edge to connect the two vertices of the clustering graph representing the two clusters would keep the graph chordal, and wherein selecting a first item from the first cluster and a second item from the second cluster comprises the steps of

- selecting, among the pairs of potentially suitable clusters, a pair of clusters from which at least one item has already been selected in a previous iteration

- using the selected pair of potentially suitable clusters as the first and second clusters
- using as the first item an item from the first cluster, wherein the item from the first cluster has already been selected in a previous iteration
- using as the second item an item from the second cluster

9. A computer-implemented method according to any one of claims 1 to 8, wherein the items are images.

10. A computer-implemented method for training a classifier, wherein the classifier is trained using the clusters obtained by the method of any one of claims 1 to 9.

11. A computer-implemented method according to claims 9 and 10, wherein the classifier is a computer vision model classifying the items thanks to object recognition or object detection.

12. A computer-implemented method for rating a classification algorithm using the clusters obtained by the method of claims 1 to 11, wherein

- The set of items is split into a training subset of items and a testing subset of items
- The clusters containing items from the training subset of items are used as classes for the algorithm so that the algorithm builds a classifier, wherein the classifier is able to assign one of the said classes to any item from the set of items it is given as an input
- Items from the testing subset of items are used to rate the algorithm, wherein rating the classification algorithm comprises the following steps:

- Giving at least one item from the testing subset of items as an input to the classifier in order to be assigned a class among the said classes
- Rating the algorithm based on the number of items from the testing set of items which were assigned by the classifier to a class corresponding to the cluster they belong to, resulting in a performance score

13. An apparatus for clustering a set of items, the apparatus comprising means for:

- Providing a plurality of clusters, wherein

- a cluster is a subset of items from the set of items,
- the clusters form a partition of the set of items and,
- each cluster is represented by a vertex of a clustering graph, wherein

- the clustering graph comprises a set of edges, wherein any edge connecting a pair of vertices means that the items being part of a cluster represented by the first vertex of the pair cannot belong to a same cluster as the items being part of a cluster represented by a second vertex of the pair, and
- the clustering graph is a chordal graph,

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal
- Selecting a first item from the first cluster and a second item from the second cluster
- Obtaining cluster information associated to the first item and the second item, wherein the cluster information states whether the first item and the second item must belong to the same cluster
- If the cluster information states that the first item and the second item must belong to the same cluster, updating the cluster by merging the first cluster and the second cluster to obtain a merged cluster and updating the clustering graph by merging the first vertex and the second vertex to obtain a new vertex, wherein the new vertex represents the merged cluster
- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

14. An apparatus according to claim 13, wherein the apparatus comprises means for iterating the following steps until a convergence criterion is satisfied:

- Selecting a first cluster, represented by a first vertex of the clustering graph, and a second cluster, represented by a second vertex of the clustering graph, such that the first vertex and the second vertex are nonadjacent, and such that adding an edge to connect the first vertex to the second vertex would keep the graph chordal

- Selecting a first item from the first cluster and a second item from the second cluster

- Obtaining cluster information associated to the first item and the second item, wherein the cluster information states whether the first item and the second item must belong to the same cluster

- If the cluster information states that the first item and the second item must belong to the same cluster, updating the clusters by merging the first cluster and the second cluster to obtain a merged cluster and updating the clustering graph by merging the first vertex and the second vertex to obtain a new vertex, wherein the new vertex represents the merged cluster

- If the cluster information states that the first item and the second item must not belong to the same cluster, updating the clustering graph adding an edge to connect the first vertex and the second vertex, wherein the added edge keeps the graph chordal and wherein the added edge means that the items being part of the first cluster do not belong to a same cluster as the items being part of the second cluster.

15. An apparatus according to claim 14 wherein the convergence criterion is that the clustering graph is complete.

FIG. 1

FIG. 2

FIG. 3a

FIG. 3b

EP 3 923 191 A1

FIG. 4

FIG. 5

21

FIG. 6

FIG. 7

FIG. 8

Europäisches Patentamt
European Patent Office
Office européen des brevets

# EUROPEAN SEARCH REPORT

**Application Number**

EP 20 17 9532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUIDO PREVIDE MASSARA ET AL: "Learning Clique Forests", ARXIV.ORG, CORNELL UNIVERSITY LIBRARY, 201 OLIN LIBRARY CORNELL UNIVERSITY ITHACA, NY 14853, 6 May 2019 (2019-05-06), XP081272957, * Section 3.2, Section 4.4, Section 5; Algorithm 1; figure 2 * | 1-15 | INV. G06K9/62 |
| X | Cetin Savkli ET AL: "Bayesian Learning of Clique Tree Structure", Proceedings of the International Conference on Data Mining (DMIN). The Steering Committee of The World Congress in Computer Science, Computer Engineering and Applied Computing (WorldComp), 23 August 2017 (2017-08-23), pages 1-7, XP055747103, Retrieved from the Internet: URL:https://arxiv.org/ftp/arxiv/papers/1708/1708.07025.pdf [retrieved on 2020-11-04] * Section 2.2; figures 2-4 * | 1,13 | |
| A | Unknown: "CHORDAL-GCN: EXPLOITING SPARSITY IN TRAINING LARGE-SCALE GRAPH CONVOLUTIONAL NETWORKS", ICLR 2020 Conference Blind Submission, 25 September 2019 (2019-09-25), pages 1-12, XP055747102, Retrieved from the Internet: URL:https://openreview.net/pdf?id=rJl05AVtwB [retrieved on 2020-11-04] * the whole document * | 1-15 | |

**TECHNICAL FIELDS SEARCHED (IPC)**

G06K

The present search report has been drawn up for all claims

| Place of search | Date of completion of the search | Examiner |
|---|---|---|
| The Hague | 4 November 2020 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. E. TARJAN ; M. YANNAKAKIS.** Simple linear-time algorithms to test chordality of graphs, test acyclicity of hypergraphs, and selectively reduce acyclic hypergraphs. *SIAM J. Comput.,* 1984, vol. 13, 566-579

- Objective criteria for the evaluation of clustering methods. **W. M. RAND.** Journal of the American Statistical Association. American Statistical Association, 1971, vol. 66, 846-850